# EUROPEAN PATENT SPECIFICATION

(11) **EP 1 441 587 B1**
(45) Date of publication and mention of the grant of the patent: **01.02.2006**
(21) Application number: 02767720.2
(22) Date of filing: 15.10.2002
(51) Int. Cl.: A01N 25/02, A01N 25/30, A01N 43/653, A01N 43/54, A01N 43/40

(54) **PESTICIDAL FORMULATIONS**
PESTIZIDE FORMULIERUNGEN
FORMULATIONS PESTICIDES

(30) Priority: 31.10.2001 GB 0126144
(43) Date of publication of application: 04.08.2004
(73) Proprietor: Syngenta Limited, Guildford Surrey GU2 7YH (GB)
(72) Inventor: WARRINGTON, Roger Paul, Jealott's Hill Intern., Berkshire RG42 6YA (GB)
(74) Representative: Osborn, Martin Keith
(86) International application number: PCT/GB2002/004656
(87) International publication number: WO 2003/037084

(56) References cited:
- EP-A- 0 052 313
- EP-A- 0 300 691
- EP-A- 1 139 756
- WO-A-92/10937
- WO-A-98/23350
- GB-A- 2 252 499
- DATABASE REGISTRY [Online] CHEMICAL ABSTRACTS SERVICE, COLUMBUS, OHIO, US; retrieved from STN-INTERNATIONAL XP002231057
- "BIOCHEMIKALIEN ORGANISCHE VERBINDUNGEN für die Forschung und DIAGNOSTIKA" 1991 , SIGMA CHEMIE GMBH XP002231056 page 566, entry I 6384 "INDULIN AT"

## Description

This invention relates to pesticidal formulations and more particularly to concentrated solutions of water-insoluble pesticides. It also relates to the preparation of these concentrated solutions and their uses in water diluted form.

Pesticides which have a low solubility in water and which are chemically stable in water are commonly marketed in the form of aqueous suspension concentrates (SCs) and diluted for use in the field. The suspended pesticidally active ingredient needs to have a small particle size in order keep it suspended while stored as a concentrate and when diluted further with water. This normally requires the active ingredient to be milled, which can be time consuming and costly. Even so, problems are often encountered with suspension concentrates as a result of settling during prolonged storage, the resistance of settled particles to resuspension and sometimes an increase in particle size of the active ingredient during storage.

One alternative is to dissolve the water-insoluble active ingredient in a water immiscible solvent, such as an aromatic hydrocarbon, to form an emulsifiable concentrate (EC). This can be stored as a stable solution and diluted with water when ready for use to form a milky emulsion of small particle size. Water-insoluble pesticides that are not readily soluble in the normal water-insoluble solvents may be dissolved in a water miscible solvent to form a storage stable soluble concentrate (SL). The pesticide forms a suspension on dilution with water. Soluble concentrates of this kind are described in, for example, WO 92/10937. These SLs are three component formulations in which a solid water insoluble pesticide and a dispersant are solubilised in a water miscible solvent. A range of dispersants are mentioned including alkylated vinylpyrrolidone polymers, ethylene oxide propylene oxide/propylene glycol condensates, nonylphenol ethylene oxide adducts, and various ethoxylates. The solvents include acetonitrile, α-butyrolactone, dimethyl ketone, dimethylfuran, dimethyl sulphoxide, methanol and *N*-methyl pyrrolidone.

The drawback in using water-soluble solvents for dissolving active ingredients of low water solubility is their poor dilution properties in water. The active ingredient is often rapidly precipitated as coarse crystals giving both application problems, such as spray filter or nozzle blockage, and poor or inconsistent bioefficacy. To prevent, or, more usually, delay precipitation, an excess of emulsifying or dispersing agent, typically at a 1:1 ratio with the active ingredient, needs to be incorporated and at these concentrations surfactants may give rise to phytotoxicity problems in their own right.

According to the present invention, there is provided a concentrated pesticidal solution which comprises one or more water-insoluble pesticides and lignin dissolved in a water miscible, polar solvent.
The pesticide or pesticides used in the solution concentrate of the invention are water insoluble and may be solid or liquid, but the invention is of particular value for pesticides that are solid at ambient temperature. Normally they will have a solubility in water of not more than 0.2% w/v. They must also be soluble in the chosen water miscible, polar solvent.

The amount of pesticide or pesticides used will usually be from 0.5 to 50% w/v, more usually from 1 to 30% w/v, and typically from 5 to 20% w/v, of the total solution.

Pesticides include herbicides, insecticides and fungicides. The invention is particularly suitable for any pesticide or mixture of pesticides having a solubility in water of not more than 0.2% w/v. Examples of pesticides for use in this invention are napropamide, haloxyfop, clodinafop-propargyl, mesotrione, cypermethrin, alpha-cypermethrin, beta-cypermethrin, cyproconazole, difenoconazole, hexaconazole, penconazole, tebuconazole, azoxystrobin, picoxystrobin, kresoxim-methyl, metominostrobin, pyraclostrobin, trifloxystrobin, cyprodinil, metalaxyl, mefenoxam, fluazinam, fludioxonil, paclobutrazol, thiabendazole and quinoxyfen. The invention is, however, particularly useful for fungicides, especially for triazole fungicides and strobilurin fungicides and for fungicidal mixtures, especially mixtures of a strobilurin fungicide, for example picoxystrobin, with a triazole fungicide such as hexaconazole or cyproconazole. Of particular interest are solution concentrates made from a fungicide selected from the group consisting of azoxystrobin, picoxystrobin, tebuconazole, cyproconazole, and picoxystrobin in admixture with cyproconazole.

By lignin is meant a lignin in its free acid state, and not an alkali metal salt of lignin, such as the sodium salt, or a lignosulphonate. Lignin, which is a phenyl propene polymer of variable molecular weight, may be obtained from the spent liquors of the sulphate and soda processes used in the wood pulping industry. A lignin so obtained is known as an alkali lignin and further designated a sulphate (or kraft) lignin or a soda lignin. Of particular suitability for use in the present invention is Indulin AT (Indulin AT is a trade name), which is a highly purified lignin made from pinewood-sulphate black liquor and produced in the form of a free flowing brown powder.

The amount of lignin used in the solution concentrate of the present invention in relation to the amount of pesticide used is suitably in the weight ratio of from 1:10 to 1:1, usually from 1:8 to 1:2, preferably from 1:6 to 1:4, and typically 1:5, of lignin to total pesticide.

Any water miscible polar solvent that can dissolve both the pesticide and lignin may be used in the invention. Suitable solvents include γ-butyrolactone, tetrahydrofurfuryl alcohol, *N*-methyl pyrrolidone, dimethyl sulphoxide, *N,N*-dimethylformamide and ethyl lactate. Preferred solvents are γ-butyrolactone and tetrahydrofurfuryl alcohol, and a particularly preferred solvent is *N*-methyl pyrrolidone. Mixtures of polar solvents may also be used, for example, a 50:50 mixture of *N*-methyl pyrrolidone and poly(ethylene glycol) 200. The amount of solvent used is sufficient to bring the total solution to 100% w/v.

Although not essential, the solution concentrate may include other additives, for instance, polymer stabilisers or anti-settling agents to improve dilution. Examples of suitable stabilisers or anti-settling agents include water soluble and water insoluble polymers such as ethyl cellulose, casein, hydroxy propyl cellulose, *Avicel™* CL-611 (based on microcrystalline cellulose), *Agrimer™* VEMA AN-216 (a vinylether maleic anhydride copolymer, MW 55,000 to 80,000), NU-FILM-P™ (poly-1-p-menthene) and *Kelzan*™(a xanthan gum). Such additives are conveniently used in amounts up to 0.5% w/v, for example 0.1 to 0.4% w/v, typically 0.25% w/v, of the total formulation, depending on their solubility in the polar solvent used. For instance, the maximum amount of *Avicel* CL-611 and *Kelzan* that can be dissolved in a *N*-methyl pyrrolidone based concentrate is about 0.1% w/v.

In one embodiment the invention provides a concentrated pesticidal solution which comprises:
(a) from 1 to 30% w/v, usually from 5 to 30% w/v and typically from 10 to 20% w/v, of one or more water insoluble pesticides and
(b) lignin in the weight ratio of from 1:10 to 1:1, usually from 1:8 to 1:2 and preferably from 1:6 to 1:4, typically 1:5, of component (a), both (a) and (b) being dissolved in
(c) a water miscible, polar solvent, such as γ-butyrolactone, tetrahydrofurfuryl alcohol, ethyl lactate and, preferably, *N*-methyl pyrrolidone.

In this embodiment, the concentrated solution optionally contains up to 0.5% w/v of other additives, such as a stabiliser or antisettling agent like ethyl cellulose.

The concentrated solution of the invention is prepared by dissolving the pesticide or pesticides, the lignin and, optionally, a stabiliser or other additive in the polar solvent. The ingredients may be added to the solvent in any order. Usually this is done at ambient temperature with suitable agitation or stirring. To assist dissolution, the solvent may be heated to temperatures up to, for example, 50°C.

When ready for use, the concentrated solution is diluted with water, usually by adding the solution to a stirred volume of water to give an aqueous dispersion of the pesticide or pesticides containing, for example, from 0.0001 to 1% w/v of the pesticide or pesticides. The aqueous pesticidal solution is then applied by spraying, or by any other known technique, to the location requiring treatment.

Thus, in a further embodiment of the present invention, there is provided a method of combating or controlling an agricultural pest which comprises applying to the pest or to a locus of the pest a pesticidally effective amount of an aqueous dispersion prepared by dispersing in water a concentrated pesticidal solution according to the invention.

The advantage of the concentrated pesticidal solutions of the present invention is that they can produce sub-micron (ca. 0.4µm) essentially mono-disperse particles on dilution into water which are stable to subsequent growth for at least 24 hours.

The invention is illustrated with reference to the following Examples. In the Examples the following abbreviations are used:
- ai =: active ingredient
- ppm =: parts per million
- w/w =: weight/weight
- NMP =: *N*-methylpyrrolidone
- DMSO=: dimethylsulphoxide
- PEG 200 =: poly(ethylene glycol), average molecular weight 200
- EL =: ethyl lactate
- SL =: soluble concentrate
- w/v =: weight/volume
- init =: initial
- GBL =: γ-butyrolactone
- THFA =: tetrahydrofurfuryl alcohol

### EXAMPLE 1

This Example shows how the particle size is assessed when various concentrated pesticidal solutions, prepared according to the present invention, are diluted in water.
Results are given for a number of invention solutions.

### Method of Dispersion Testing

Formulations were tested for dispersing properties in water by adding 2.5ml solution concentrate by pipette to a stoppered Crow receiver containing 97.5ml of a CIPAC standard hard water. The initial "bloom" was noted when the first few drops were added to the water, then the receiver was inverted 3 times and homogeneity of the dispersion was noted. Checks were made at set time intervals over a 24 hour period to check for any sedimentation or crystallisation.

Particle size checks on dilutions initially and after 24 hours were carried out using a Malvern Mastersizer S. Instrument parameters were as follows:

| Polydisperse model | Particle size values quoted:- |
|---|---|
| Obscuration 2-4% | volume median diameter D(v,0.5) |
| Pump speed 40% | volume mean diameter D[4,3] |
| Stirrer Speed 20% | % less than 1 µm |
| Ultrasonics - nil | |

The CIPAC standard hard water types that were used were CIPAC A and CIPAC C.
These have the following characteristics:
CIPAC A: 20 ppm hardness; pH 5.0-6.0; Ca²⁺ : Mg²⁺ =1:1
CIPAC C: 500 ppm hardness; pH 7.0-8.0; Ca²⁺ : Mg²⁺ = 4:1

### (a) Soluble concentrates of azoxystrobin

SL formulations containing 10% w/v azoxystrobin in NMP and varying levels of lignin were prepared and tested for dilution properties. Tables 1 and 2 below show the results.

**Table 1: Azoxystrobin dilutions in CIPAC A water**

| Indulin AT % w/v | Initial CIPAC A | | | 24 hour CIPAC A | | |
|---|---|---|---|---|---|---|
| | Mean | Median | %<1 µm | Mean | Median | %<1 µm |
| 1 | 9.71 | 0.44 | 85.69 | 0.39 | 0.37 | 100.00 |
| 2 | 3.46 | 0.38 | 90.56 | 1.25 | 0.39 | 95.68 |
| 3 | 0.40 | 0.38 | 100.00 | 0.39 | 0.37 | 100.00 |
| 5 | 0.39 | 0.37 | 100.00 | 0.38 | 0.36 | 100.00 |
| 10 | 2.77 | 0.38 | 76.31 | 4.51 | 0.41 | 70.43 |

**Table 2: Azoxystrobin dilutions in CIPAC C water**

| Indulin AT % w/v | Initial CIPAC C | | | 24 hour CIPAC C | | |
|---|---|---|---|---|---|---|
| | Mean | Median | %<1 µm | Mean | Median | %<1 µm |
| 1 | - | - | - | 0.88 | 0.38 | 94.11 |
| 2 | 1.39 | 0.37 | 88.05 | 0.53 | 0.39 | 96.58 |
| 3 | 0.74 | 0.38 | 93.62 | 1.96 | 0.41 | 83.11 |
| 5 | 1.33 | 0.40 | 87.76 | 85.44 | 0.61 | 64.38 |
| 10 | 5.14 | 0.90 | 51.93 | 7.15 | 1.90 | 39.38 |

These results indicate that there is an optimum level of Indulin AT at around 2-3% for maintaining fine particle size.

At 5-10% there is evidence of flocculation after 24 hours, especially in CIPAC C, shown by increasing mean particle size values and a reduction in percentage less than 1 µm in size.

### (b) Soluble concentrates of picoxystrobin

10% w/w SL formulations in NMP containing 1, 2 and 5% w/v lignin were prepared and dilutions analysed for particle size after 24 hours. Results are shown in Table 3.

**Table 3: Picoxystrobin dilutions**

| Indulin AT % w/v | CIPAC A | | | CIPAC C | | |
|---|---|---|---|---|---|---|
| | Mean | Median | %<1 µm | Mean | Median | %<1 µm |
| 1 | 14.01 | 0.56 | 76.32 | 23.81 | 0.68 | 65.22 |
| 2 | 1.69 | 0.51 | 84.29 | 1.11 | 0.52 | 81.21 |
| 5 | 1.78 | 0.46 | 86.54 | 1.16 | 0.57 | 73.57 |

### (c) Soluble concentrate of tebuconazole

A 10% w/v SL formulation in NMP was prepared containing 5% lignin. Dilutions after 24 hours gave the results shown in Table 4.

**Table 4: Tebuconazole dilution**

| Indulin AT % w/v | CIPAC A | | | CIPAC C | | |
|---|---|---|---|---|---|---|
| | Mean | Median | %<1 µm | Mean | Median | %<1 µm |
| 5 | 0.36 | 0.35 | 100.00 | 0.37 | 0.36 | 100.00 |

### (d) Soluble concentrate of cyproconazole

A 10% w/v SL formulation in NMP was prepared containing 5% lignin. The results obtained are shown in Table 5.

**Table 5: Cyproconazole dilution**

| Indulin AT % w/v | CIPAC A | | | CIPAC C | | |
|---|---|---|---|---|---|---|
| | Mean | Median | %<1 µm | Mean | Median | %<1 µm |
| 5 | 14.41 | 0.35 | 78.90 | 14.22 | 0.33 | 82.39 |

### (e) Soluble concentrate of a picoxystrobin/cyproconazole mixture

An SL formulation of 12,5% w/v picoxystrobin and 5.0% w/v cyproconezole was prepared containing 8% w/v lignin. Dilution after 24 hours gave the results shown in Table 6.

**Table 6: Picoxystrobin/cyproconazole dilution**

| Indulin AT % w/v | CIPAC A | | |
|---|---|---|---|
| | Mean | Median | %<1 µm |
| 8 | 3.50 | 0.46 | 80.33 |

### EXAMPLE 2

This Example illustrates the use of alternative polar solvents for preparing the concentrated solutions of the invention and the use of other pesticides.

SL formulations containing 10% w/w active ingredient and 4% w/w Indulin AT were prepared using the active ingredients azoxystrobin, hexaconazole, cypermethrin and mesotrione with NMP as solvent. In addition, similar formulations of azoxystrobin were prepared with the following solvents: GBL, DMSO, THFA, ethyl lactate and 50% NMP/50% PEG 200.

Dilutions of these formulations (2500 ppm active ingredient in CIPAC C water) were tested by the method described in Example 1 with the results shown in Table 7.

**Table 7: Alternative solvents**

| Solvent | Dilution quality after time (hours) | | | | | | | Sieve Retention (75µm) |
|---|---|---|---|---|---|---|---|---|
| | Init | 0.5 | 1.0 | 2.0 | 3.0 | 6.0 | 24.0 | |
| NMP | * | * | * | * | * | * | * | nil |
| GBL | * | * | * | * | * | * | * | nil |
| DMSO | * | * | * | * | * | * | * | nil |
| THFA | * | * | * | * | * | * | * | nil |
| EL | * | * | * | * | * | * | * | nil |
| NMP/PEG | * | * | * | * | * | * | * | nil |

| | | | | | | | | |
|---|---|---|---|---|---|---|---|---|
| * Fine sub-micron particle suspension | | | | | | | | |

These results show that all combinations of active ingredients and solvents gave satisfactory dilutions after 24 hours, any fine suspension passing a 75 µm sieve.

## Claims

1. A concentrated pesticidal solution which comprises one or more water-insoluble pesticides and lignin dissolved in a water miscible, polar solvent.

2. A concentrated pesticidal solution according to claim 1 in which the amount of pesticide or pesticides used is from 0.5 to 50% w/v.

3. A concentrated pesticidal solution according to claim 1 or 2 in which the pesticide is a strobilurin fungicide or a triazole fungicide or a mixture thereof.

4. A concentrated pesticidal solution according to claim 1 or 2 in which the pesticide is a fungicide selected from the group consisting of azoxystrobin, picoxystrobin, tebuconazole, cyproconazole, and picoxystrobin in admixture with cyproconazole.

5. A concentrated pesticidal solution according to any one of the preceding claims in which the amount of lignin used is in the weight ratio of from 1:10 to 1:1 of lignin to pesticide.

6. A concentrated pesticidal solution according to any one of the preceding claims in which the polar solvent is selected from the group consisting of γ-butyrolactone, tetrahydrofurfuryl alcohol, ethyl lactate and *N*-methyl pyrrolidone.

7. A concentrated pesticidal solution according to any one of the preceding claims which includes a polymer stabiliser or anti-settling agent.

8. A concentrated pesticidal solution according to claim 7 in which the polymer stabiliser or antisettling agent is ethyl cellulose.

9. A concentrated pesticidal solution which comprises:
(a) from 1 to 30% w/v of one or more water-insoluble pesticides and
(b) lignin in the weight ratio of from 1:10 to 1:1 of component (a), both (a) and (b) being dissolved in a water miscible, polar solvent.

10. A concentrated pesticidal solution according to claim 9 which contains up to 0.5% w/v of another additive.

11. A method of combating or controlling an agricultural pest which comprises applying to the pest or to a locus thereof, a pesticidally effective amount of an aqueous dispersion prepared by dispersing in water a concentrated pesticidal solution as claimed in claim 1.

## Revendications

1. Solution pesticide concentrée qui comprend un ou plusieurs pesticides insolubles dans l'eau et de la lignine dissoute dans un solvant polaire miscible à l'eau.

2. Solution pesticide concentrée selon la revendication 1, dans laquelle la quantité du ou des pesticides utilisés se situe dans la plage de 0,5 à 50% *m*/*V.*

3. Solution pesticide concentrée selon la revendication 1 ou la revendication 2, dans laquelle le pesticide est un fongicide à base de strobilurine ou un fongicide à base de triazole ou un mélange de ceux-ci.

4. Solution pesticide concentrée selon la revendication 1 ou la revendication 2, dans laquelle le pesticide est un fongicide choisi dans le groupe constitué par l'azoxystrobine, la picoxystrobine, le tébuconazole, le cyproconazole et la picoxystrobine en mélange avec du cyproconazole.

5. Solution pesticide concentrée selon l'une quelconque des revendications précédentes, dans laquelle la quantité de lignine utilisée correspond à un ratio en poids de la lignine sur le pesticide dans la plage de 1:10 à 1:1.

6. Solution pesticide concentrée selon l'une quelconque des revendications précédentes, dans laquelle le solvant polaire est choisi dans le groupe constitué par la γ-butyrolactone, l'alcool tétrahydrofurfurylique, le lactate d'éthyle et la *N*-méthylpyrrolidone.

7. Solution pesticide concentrée selon l'une quelconque des revendications précédentes, qui comprend un agent stabilisant polymère ou un agent anti-sédimentation.

8. Solution pesticide concentrée selon la revendication 7, dans laquelle l'agent stabilisant polymère ou l'agent anti-sédimentation est l'éthylcellulose.

9. Solution pesticide concentrée qui comprend :
(a) de 1 à 30% *m*/*V* d'un ou plusieurs pesticides insolubles dans l'eau, et
(b) de la lignine selon un ratio en poids par rapport au composant (a) dans la plage de 1:10 à 1:1, les composés (a) et (b) étant dissous tous les deux dans un solvant polaire miscible à l'eau.

10. Solution pesticide concentrée selon la revendication 9, qui contient jusqu'à 0,5% *m*/*V* d'un autre additif.

11. Procédé pour combattre ou contrôler un nuisible agricole, qui comprend l'application au nuisible ou à son locus d'une quantité pesticide efficace d'une dispersion aqueuse préparée en dispersant dans de l'eau une solution pesticide concentrée selon la revendication 1.

## Patentansprüche

1. Konzentrierte pestizide Lösung, die ein oder mehrere wasserunlösliche Pestizide und Lignin umfaßt, gelöst in einem wassermischbaren, polaren Lösungsmittel.

2. Konzentrierte pestizide Lösung gemäß Anspruch 1, worin die Menge von verwendetem Pestizid oder verwendeten Pestiziden 0,5 bis 50 % G/V ist.

3. Konzentrierte pestizide Lösung gemäß Anspruch 1 oder 2, worin das Pestizid ein Strobilurinfungizid oder ein Triazolfungizid oder eine Mischung daraus ist.

4. Konzentrierte pestizide Lösung gemäß Anspruch 1 oder 2, worin das Pestizid ein Fungizid ist, das aus der Gruppe ausgewählt ist, die aus Azoxystrobin, Picoxystrobin, Tebuconazol, Cyproconazol und Picoxystrobin im Gemisch mit Cyproconazol besteht.

5. Konzentrierte pestizide Lösung gemäß einem der vorhergehenden Ansprüche, worin die Menge von verwendetem Lignin im Gewichtsverhältnis von 1:10 bis 1:1 von Lignin zu Pestizid ist.

6. Konzentrierte pestizide Lösung gemäß einem der vorhergehenden Ansprüche, worin das polare Lösungsmittel aus der Gruppe ausgewählt ist, die aus γ-Butyrolacton, Tetrahydrofurfurylalkohol, Ethyllactat und N-Methylpyrrolidon besteht.

7. Konzentrierte pestizide Lösung gemäß einem der vorhergehenden Ansprüche, die einen Polymerstabilisator oder ein Schwebemittel einschließt.

8. Konzentrierte pestizide Lösung gemäß Anspruch 7, worin der Polymerstabilisator oder das Schwebemittel Ethylcellulose ist.

9. Konzentrierte pestizide Lösung, die:
(a) 1 bis 30 % G/V eines oder mehrerer wasserunlöslicher Pestizide und
(b) Lignin im Gewichtsverhältnis von 1:10 bis 1:1 von Komponente (a) umfaßt, wobei sowohl (a) als auch (b) in einem wassermischbaren, polaren Lösungsmittel gelöst sind.

10. Konzentrierte pestizide Lösung gemäß Anspruch 9, die bis zu 0,5 % G/V eines anderen Additivs enthält.

11. Verfahren zum Bekämpfen oder Kontrollieren eines landwirtschaftlichen Schädlings, das das Ausbringen einer pestizid wirksamen Menge einer wäßrigen Dispersion, die durch Dispergieren einer konzentrierten pestiziden Lösung gemäß Anspruch 1 in Wasser hergestellt wird, auf den Schädling oder einen Locus davon umfaßt.
